# EUROPÄISCHE PATENTSCHRIFT

(11) **EP 1 651 584 B1**
(45) Veröffentlichungstag und Bekanntmachung des Hinweises auf die Patenterteilung: **22.11.2006**
(21) Anmeldenummer: 04740575.8
(22) Anmeldetag: 02.07.2004
(51) Int. Cl.: C04B 41/70, C23F 13/02

(54) **MEHRLAGIGER OBERFLÄCHENSCHUTZ FÜR STAHLBETON ZUR VERBESSERUNG DES KORROSIONSSCHUTZES VON STAHLBETONBAUWERKEN ODER STAHLBETONBAUTEILEN SOWIE VERFAHREN ZUR HERSTELLUNG DESSELBEN**
MULTI-LAYERED SURFACE PROTECTION FOR REINFORCED CONCRETE IN ORDER TO IMPROVE PROTECTION AGAINST CORROSION FOR REINFORCED CONCRETE CONSTRUCTIONS OR REINFORCED CONCRETE BUILDING COMPONENTS AND METHOD FOR THE PRODUCTION THEREOF
PROTECTION DE SURFACE MULTICOUCHE POUR DU BETON ARME, DESTINEE A AMELIORER LA PROTECTION CONTRE LA CORROSION D'EDIFICES EN BETON ARME OU DE PARTIES STRUCTURALES EN BETON ARME, ET PROCEDE DE PRODUCTION DE LADITE PROTECTION

(30) Priorität: 03.07.2003 DE 10330241
(43) Veröffentlichungstag der Anmeldung: 03.05.2006
(73) Patentinhaber: Grillo-Werke AG, D-47169 Duisburg (DE)
(72) Erfinder: SPRIESTERSBACH, Jochen, 47058 Duisburg (DE); PRENGER, Frank, 40885 Ratingen (DE); WISNIEWSKI, Jürgen, 46487 Wesel (DE)
(74) Vertreter: von Kreisler Selting Werner
(86) Internationale Anmeldenummer: PCT/EP2004/007217
(87) Internationale Veröffentlichungsnummer: WO 2005/003061

(56) Entgegenhaltungen:
- DE-C- 19 748 105
- PATENT ABSTRACTS OF JAPAN Bd. 1999, Nr. 08, 30. Juni 1999 (1999-06-30) & JP 11 081502 A (MATSUMURAGUMI:KK; KINKI KOUENERUGII KAKO GIJUTSU KENKYUSHO; YOSHIDA TE), 26. März 1999 (1999-03-26)

## Beschreibung

Die Erfindung betrifft einen mehrlagigen Oberflächenschutz für Stahlbeton zur Verbesserung des Korrosionsschutzes von Stahlbetonbauwerken oder Stahlbetonbauteilen sowie ein Verfahren zu seiner Herstellung.

Die Korrosion von Stahlbetonbauwerken ist ein häufig auftretendes Phänomen. Bauwerke oder Bauteile, die von Korrosion betroffen sind, müssen aufwendig saniert werden, um ein Fortschreiten der Korrosion aufzuhalten und nach Möglichkeit die eingetretenen Schäden rückgängig zu machen. Insbesondere Bauwerke, die befahrbar sind, starken mechanischen und witterungsbedingten Einflüssen ausgesetzt sind, beispielsweise im Winter durch Streusalz etc., sind besonders anfällig für Korrosion. Es sind verschiedenartige Methoden zur Behebung korrosionsbedingter Schäden oder zum Aufbringen von Korrosionsschutz bei Stahlbetonbauwerken bekannt. (Siehe Handbuch der Brückeninstandhaltung 2. Auflage, Seite 225ff, Vollrath, Tathoff; Verlag Bau+Technik, 2002)

Die DE-197 48 105 C1 betrifft ein Verfahren zur Verbesserung der Korrosionsbeständigkeit von mit thermisch aufgebrachten Spritzschichten aus Metall auf Stahlbeton. Dabei wird auf die Metallschicht ein Polyurethanharz aufgebracht in der Art, dass sich kein geschlossener Film bildet, um eine notwendige Wasserdampfdurchlässigkeit oder einen Gasaustausch zu gewährleisten. Auf der anderen Seite können bei weiteren Schichtaufbauten Komponenten mit dem Metall in Berührung kommen und gegebenenfalls mit dem Metall in unerwünschter Weise in Wechselwirkung treten. Des Weiteren ist möglicherweise die Haftung von darüberliegenden Schichten nicht ausreichend.

Aufgabe der vorliegenden Erfindung ist die Angabe eines Verfahrens zur Verbesserung der Korrosionsbeständigkeit von Stahlbetontellen und daraus aufgebauten Stahlbetonbauwerken sowie die Schaffung von Stahlbetonbauteilen und damit verbundenen Stahlbetonwerken, die eine verbesserte Beständigkeit gegen Korrosion aufweisen und die Nachteile des Standes der Technik vermieden werden.

Gelöst wird diese Aufgabe durch ein Verfahren gemäß Patentanspruch 1. Die unteransprüche 2 bis 13 betreffen bevorzugte Ausführungsformen des erfindungsgemäßen Verfahrens. Anspruch 14 betrifft einen mehrlagigen Oberflächenschutz. Die Unteransprüche 15 und 16 betreffen bevorzugte Ausführungsformen des erfindungsgemäßen Oberflächenschutzes.

Das erfindungsgemäße Verfahren zur Herstellung eines mehrlagigen Oberflächenschutzes für Stahlbeton zur Verbesserung des Korrosionsschutzes von Stahlbetonbauwerken oder Stahlbetonbauteilen, die eine auf dem Stahlbeton aufgespritzte erste Schicht im wesentlichen aus Zink, die elektrisch leitend mit der Metallbewehrung des Stahlbetons verbunden ist und eine zweite Schicht aus einem polymeren Werkstoff aufweisen, ist dadurch gekennzeichnet, dass
- auf die erste Schicht aus Zink die zweite Schicht aus niedrigviskosen Polymeren in Form eines geschlossenen Films aufgetragen wird und
- darauf eine Oberflächenschutzschicht aufgetragen wird.

In einer Ausführungsform des erfindungsgemäßen Verfahrens wird die erste Schicht aus Zink thermisch aufgespritzt.

Auf die erste Schicht aus Zink kann eine Zinklegierung aufgebracht werden. Als Zinklegierung kommt insbesondere eine Zinkaluminiumlegierung mit Aluminiumgehalten bis 30 % Al in Betracht. Die Aufbringung des Zinks erfolgt durch verschiedene Spritzverfahren, beispielsweise das Drahtflammspritzen oder das Drahtlichtbogenspritzen. Diese Verfahren unterscheiden sich insbesondere durch verschiedene Prozesstemperaturen und damit auch durch unterschiedliche Auftragswirkungsgrade. Typische Schichtdicken der Zinkschichten liegen im Bereich zwischen 150 und 500 µm.

Erfindungsgemäß werden als niedrigviskose Polymere zum Auftragen der zweiten Schicht Polyurethanharze oder Epoxydharze eingesetzt. Letztere haften auch ohne die Anwesenheit von Polyurethan-Grundschichten an der Schicht aus Zink. Dabei ist die Ausbildung eines geschlossenen Films zu beachten.

Zur Erzielung einer besseren Haftung zwischen der mindestens zweiten Schicht und der darüber liegenden Oberflächenschutzschicht kann die mindestens zweite Schicht mit Quarzsand abgestreut werden. Durch das Auftragen der mindestens zweiten Schicht wird erreicht, dass die Poren verschlossen werden und das Aufsaugen des Bindemittels für das Auftragen der weiteren Schichten verhindert wird. Desweiteren wird das Eindringen von Luft, Feuchtigkeit und beschichtungsschädlichen Stoffen, beispielsweise alkalischen Komponenten, aus den unter den Schichten liegenden Substraten in die darauf liegenden Schichten verhindert. Der Untergrund im oberflächennahen Bereich wird darüber hinaus verfestigt und es wird ein verbesserter Verbund zu nachfolgenden Schichten hergestellt. Eingesetzt werden niedrigviskose Polymere, damit ein Auftragen aus Lösungsmittel unterbleiben kann. Dadurch wird die Blasenbildung, die zu unvollständiger Abdeckung mit dem niedrigviskosen Polymer führt, verhindert.

Erfindungsgemäß wird auf die mindestens zweite Schicht eine Oberflächenschutzschicht aufgebaut. Diese kann eine abdichtende Schicht, eine rissüberbrückende Schicht und oder eine Verschleißschicht sein.

Die Oberflächenschutzschichten erfüllen eine oder mehrere der folgenden Funktionen:
■ Wasserdampfdurchlässigkeit
■ Kohlenstoffdioxiddichtigkeit
■ Rissüberbrückung
■ Widerstandsfähigkeit gegenüber mechanischer Beanspruchung, wie Verschleißfestigkeit, Zwangsspannungen durch Temperaturwechsel.

Daraus ergeben sich im Grunde drei verschiedene Typen von Oberflächenschutzschichten, die von einer der oben genannten Schichten erfüllt werden können.

Dabei ist die abdichtende Schicht aus Kunststoffdispersionen auf Basis von unterschiedlichen Polymeren aufgebaut.

Die rissüberbrückende Eigenschaft einer Beschichtung wird durch Elastifizierung oder ausreichende Dicke der Schicht erreicht. Dazu werden insbesondere elastomere Kunststoffe, wie Polyurethan eingesetzt. Gegebenenfalls kann die Beschichtung mit textilen Einlagen bewehrt werden, insbesondere durch Glasfasergewebe.

Die Verschleißschicht wird üblicherweise aus duroplastischen Kunststoffen, wie einem Epoxidharz hergestellt. Diese Schichten übernehmen üblicherweise keine andere der genannten Funktionen, da ihre Abnutzung ihrem Einsatzzweck entspricht. So werden sie in der Regel zusätzlich aufgebracht, wenn die Oberfläche mechanisch oder chemisch stark beansprucht wird, beispielsweise bei Brückenkonstruktionen oder Parkhäusern sowie anderen befahrenen Oberflächen. Üblicherweise wird die Dichtungs- und Rissüberbrückungsfunktion häufiger von den unter der Verschleißschicht liegenden Schichten übernommen. Es ist aber auch möglich, kombinierte Schichten einzusetzen, die gleichzeitig rissüberbrückend und verschleißfest sind. Solche Schichten bestehen üblicherweise aus Mischsystemen von Elastomeren und Duroplasten und können mit verschleißfestem Zuschlagsstoff angereichert sein.

Zur Verminderung der Verschmutzungsneigung und zur besseren Einbindung an der Oberfläche liegender Zuschlagsstoffe, insbesondere feiner Körner, kann die Verschleißschicht mit einer Deck- oder Kopfversiegelung versehen werden. Diese besteht typischerweise aus duroplastischen Kunststoffen und wird nach vollständiger Reaktion der Verschleißschicht aufgebracht.

Im Falle der Verwendung von Bitumenschweißbahnen als Oberflächenschutzschicht kann die zweite Schicht auch eine Deckversiegelungsschicht sein.

Gegenstand der Erfindung ist ein mehrlagiger Oberflächenschutz für Stahlbeton zur Verbesserung des Korrosionsschutzes von Stahlbetonbauwerken oder Sfiahlbetonbauteilen durch an der Oberfläche des Stahlbetons befindliche Schichten, erhältlich nach dem erfindungsgemäßen Verfahren.

Der erfindungsgemäße mehrlagige Oberflächenschutz für Stahlbeton zur Verbesserung des Korrosionsschutzes von Stahlbetonbauwerken oder Stahlbetonbauteilen weist an der Oberfläche eine erste Schicht aus Zink, eine zweite geschlossene Schicht aus einem polymeren Kunststoff und eine Oberflächenschutzschicht auf.

In einer Ausführungsform der Erfindung ist die Oberflächenschutzschicht eine abdichtende Oberflächenschutzschicht, eine rissüberbrückende Oberflächenschutzschicht und/oder eine Verschleißschicht. Auf der Oberflächenschutzschicht kann eine Deckversiegelung angeordnet sein.

Die Erfindung wird an Hand des folgenden Beispiels näher erläutert.

### Beispiel:

Eine ca. 300 µm dicke Zinkschicht (Schicht 1) wurde auf den Stahlbeton aufgespritzt. Darauf aufbauend wurde eine Grundierung (Schicht 2) mit einem Zweikomponenten Epoxid-Beschichtungsmaterial (Conipox 601, 0,3 - 0,5 kg/m²) aufgetragen und mit Quarzsand abgestreut. Conipox 601 wird von der Firma Conica Technik AG, Schaffhausen, CH, vertrieben. Der zum Abstreuen verwendete Quarzsand weist eine Körnung von 0,3 - 0,8 mm auf und wird in einer Menge von 0,8 - 1 kg/m² aufgetragen. Auf die Grundierung wird eine dritte Schicht als elastische Oberflächenschutzschicht aufgebracht. Dazu wird ein Zweikomponenten Polyurethan wie Conipur 268 F (Conica Technik AG, Schaffhausen, CH) in einer Menge von 2,1 - 2,5 kg/m² aufgebracht. Darauf wird eine verschleißfeste Deckschicht aus einem Zweikomponenten Polyurethan (Conipur 267 F, Conica Technik AG, Schaffhausen, CH) in einer Menge von 1,0 - 1,5 kg/m² aufgebracht. Diese verschleißfeste Deckschicht wird mit Quarzsand einer Körnung von 0,3 - 0,8 mm in einer Menge von 3,0 - 5,0 kg/m² abgestreut. Die Deckversiegelung als Schicht 5 wird wiederum aus einem Zweikomponenten Epoxidharz gebildet, das in einer Menge von 0,5 - 0,8 kg/m² eingesetzt wird (Conipox 272, Conica Technik AG, Schaffhausen, CH).

## Patentansprüche

1. Verfahren zur Herstellung eines mehrlagigen Oberflächenschutzes für Stahlbeton zur Verbesserung des Korrosionsschutzes von Stahlbetonbauwerken oder Stahlbetonbauteilen, die eine auf dem Stahlbeton aufgespritzte erste Schicht im wesentlichen aus Zink, die elektrisch leitend mit der Metallbewehrung des Stahlbetons verbunden ist und eine zweite Schicht aus einem polymeren Werkstoff aufweisen, **dadurch gekennzeichnet, dass**
• auf die erste Schicht aus Zink die zweite Schicht aus niedrigviskosen Polymeren in Form eines geschlossenen Films aufgetragen wird und
• darauf eine Oberflächenschutzschicht aufgetragen wird.

2. Verfahren nach Anspruch 1, **dadurch gekennzeichnet, dass** die erste Schicht aus Zink thermisch aufgespritzt wird.

3. Verfahren nach Anspruch 1 und/oder 2, **dadurch gekennzeichnet, dass** auf die erste Schicht eine Zinklegierung aufgespritzt wird.

4. Verfahren nach den Ansprüchen 1 bis 3, **dadurch gekennzeichnet, dass** das niedrigviskose Polymer zum Auftragen der zweiten Schicht ausgewählt ist aus der Gruppe bestehend aus Polyurethanharzen oder Epoxydharzen.

5. Verfahren nach mindestens einem der Ansprüche 1 bis 4, **dadurch gekennzeichnet, dass** als Oberflächenschutzschicht eine abdichtende Schicht, eine rissüberbrückende Schicht und oder eine Verschleißschicht aufgebaut wird.

6. Verfahren nach Anspruch 5, **dadurch gekennzeichnet, dass** die abdichtende Schicht aus Kunststoffdispersionen auf Basis von unterschiedlichen Polymeren aufgebaut ist.

7. Verfahren nach Anspruch 5, **dadurch gekennzeichnet, dass** die rissüberbrückende Schicht aus elastomeren Kunstoffen aufgebaut ist.

8. Verfahren nach Anspruch 5 und/oder 7, **dadurch gekennzeichnet, dass** die rissüberbrückende Schicht mit Glasfasergewebe bewehrt ist.

9. Verfahren nach Anspruch 8, **dadurch gekennzeichnet, dass** der elastomere Kunststoff aus Polyurethan, Epoxy oder aus technisch gleichwertigen Polymeren besteht.

10. Verfahren nach mindestens einem der Ansprüche 5 bis 9, **dadurch gekennzeichnet, dass** die Verschleißschicht aus duroplastischen Kunstoffen aufgebaut ist.

11. Verfahren nach Anspruch 10, **dadurch gekennzeichnet, dass** der duroplastische Kunststoff ein Epoxidharz ist.

12. Verfahren nach mindestens einem der Ansprüche 1 bis 11, **dadurch gekennzeichnet, dass** eine Deckversiegelungsschicht vorgesehen ist.

13. Verfahren nach Anspruch 1 und/oder 2, **dadurch gekennzeichnet, dass** im Falle der Verwendung von Bitumen-Schweißbahnen als Oberflächenschutzschicht die zweite Schicht eine Deckversiegelungsschicht ist.

14. Mehrlagiger Oberflächenschutz für Stahlbeton zur Verbesserung des Korrosionsschutzes von befahrbaren Stahlbetonbauwerken oder Stahlbetonbauteilen durch an der Oberfläche des Stahlbetons befindliche Schichten, erhältlich nach einem Verfahren gemäß mindestens einem der Ansprüche 1 bis 13.

15. Mehrlagiger Oberflächenschutz für Stahlbeton zur Verbesserung des Korrosionsschutzes von befahrbaren Stahlbetonbauwerken oder Stahlbetonbauteilen nach Anspruch 14, **dadurch gekennzeichnet, dass** die Oberflächenschutzschicht eine abdichtende Oberflächenschutzschicht, eine rissüberbrückende Oberflächenschutzschicht und/oder eine Verschleißschicht ist.

16. Mehrlagiger Oberflächenschutz für Stahlbeton zur Verbesserung des Korrosionsschutzes von befahrbaren Stahlbetonbauwerken oder Stahlbetonbauteilen nach mindestens einem der Ansprüche 14 bis 15 **dadurch gekennzeichnet, dass** auf der Oberflächenschutzschicht eine Deckversiegelung angeordnet ist.

## Claims

1. A process for preparing a multilayer surface protection coating for reinforced concrete for improving the corrosion protection of reinforced concrete structures or reinforced concrete construction parts which bear a first layer sprayed onto said reinforced concrete, substantially made of zinc, which is connected with the metal armoring of said reinforced concrete in an electrically conductive way and a second layer of a polymeric material, **characterized in that**:
• said second layer of low-viscosity polymers is applied to said first layer of zinc in the form of a continuous film; and
• a surface protection layer is applied on top thereof.

2. The process according to claim 1, **characterized in that** said first layer of zinc is applied by thermal spraying.

3. The process according to claim 1 and/or 2, **characterized in that** a zinc alloy is sprayed onto said first layer.

4. The process according to claims 1 to 3, **characterized in that** said low-viscosity polymer for applying said second layer is selected from the group consisting of polyurethane resins and epoxy resins.

5. The process according to at least one of claims 1 to 4, **characterized in that** a sealing layer, a crack-bridging layer and/or a wear layer is built as said surface protection layer.

6. The process according to claim 5, **characterized in that** said sealing layer is made of plastic dispersions based on different polymers.

7. The process according to claim 5, **characterized in that** said crack-bridging layer is made of elastomeric plastics.

8. The process according to claim 5 and/or 7, **characterized in that** said crack-bridging layer is reinforced with a glass fiber fabric.

9. The process according to claim 8, **characterized in that** said elastomeric plastics material is made of polyurethane, epoxy or technically equivalent polymers.

10. The process according to at least one of claims 5 to 9, **characterized in that** said wear layer is made of thermosetting materials.

11. The process according to claim 10, **characterized in that** said thermosetting material is an epoxy resin.

12. The process according to at least one of claims 1 to 11, **characterized in that** a cover sealing layer is provided.

13. The process according to claim 1 and/or 2, **characterized in that** the second layer is a cover sealing layer in the case where bitumen welding sheets are used as the surface protection layer.

14. A multilayer surface protection coating for reinforced concrete for improving the corrosion protection of reinforced concrete structures capable of bearing vehicles or reinforced concrete construction parts by layers present on the surface of said reinforced concrete, obtainable by the process according to at least one of claims 1 to 13.

15. The multilayer surface protection coating for reinforced concrete for improving the corrosion protection of reinforced concrete structures capable of bearing vehicles or reinforced concrete construction parts according to claim 14, **characterized in that** said surface protection layer is a sealing surface protection layer, a crack-bridging surface protection layer and/or a wear layer.

16. The multilayer surface protection coating for reinforced concrete for improving the corrosion protection of reinforced concrete structures capable of bearing vehicles or reinforced concrete construction parts according to at least one of claims 14 to 15, **characterized in that** a cover seal is provided on said surface protection layer.

## Revendications

1. Procédé de réalisation d'une protection de surface multicouche pour béton armé dans le but d'améliorer la protection contre la corrosion d'édifices en béton armé ou d'éléments de construction en béton armé qui comportent une première couche, essentiellement de zinc, qui est pulvérisée sur le béton armé et qui est reliée de façon électriquement conductrice à l'armature métallique du béton armé, et une deuxième couche de matière polymère, **caractérisé en ce que**
la deuxième couche de polymères de faible viscosité est appliquée sur la première couche de zinc sous la forme d'un film fermé et
une couche de protection de surface est appliquée sur la première couche.

2. Procédé selon la revendication 1, **caractérisé en ce que** la première couche de zinc est pulvérisée par moyens thermiques.

3. Procédé selon la revendication 1 et/ou 2, **caractérisé en ce qu'**un alliage de zinc est pulvérisé sur la première couche.

4. Procédé selon les revendications 1 à 3, **caractérisé en ce que** le polymère de faible viscosité destiné à l'application de la deuxième couche est choisi dans le groupe constitué par les résines de polyuréthane ou les résines époxy.

5. Procédé selon au moins l'une des revendications 1 à 4, **caractérisé en ce qu'**une couche d'étanchéité, une couche de recouvrement de fissures et/ou une couche d'usure sont appliquées comme couche de protection de surface.

6. Procédé selon la revendication 5, **caractérisé en ce que** la couche d'étanchéité est élaborée à partir de dispersions de matière plastique à base de différents polymères.

7. Procédé selon la revendication 5, **caractérisé en ce que** la couche de recouvrement de fissures est élaborée à partir de matières plastiques élastomères.

8. Procédé selon la revendication 5 et/ou 7, **caractérisé en ce que** la couche de recouvrement de fissures est armée avec un tissu de fibres de verre.

9. Procédé selon la revendication 8, **caractérisé en ce que** la matière plastique élastomère est du polyuréthane, de l'époxy ou un polymère techniquement équivalent.

10. Procédé selon l'au moins une des revendications 5 à 9, **caractérisé en ce que** la couche d'usure est élaborée à partir de matières duroplastiques.

11. Procédé selon la revendication 10, **caractérisé en ce que** la matière duroplastique est une résine époxy.

12. Procédé selon l'au moins une des revendications 1 à 11, **caractérisé en ce qu'**il est prévu une couche de scellement de finition.

13. Procédé selon la revendication 1 et/ou 2, **caractérisé en ce que** la deuxième couche est une couche de scellement de finition dans le cas où l'on utilise des panneaux de carton bitumé comme couche de protection de surface.

14. Protection de surface multicouche pour béton armé dans le but d'améliorer la protection contre la corrosion d'ouvrages en béton armé ou d'éléments de construction en béton armé carrossables par des couches se trouvant à la surface du béton armé, réalisable conformément à un procédé selon l'au moins une des revendications 1 à 13.

15. Protection de surface multicouche pour béton armé dans le but d'améliorer la protection contre la corrosion d'ouvrages en béton armé ou d'éléments de construction en béton armé carrossables selon la revendication 14, **caractérisée en ce que** la couche de protection de surface est une couche de protection de surface réalisant l'étanchéité, une couche de protection de surface recouvrant les fissures et/ou une couche d'usure.

16. Protection de surface multicouche pour béton armé dans le but d'améliorer la protection contre la corrosion d'ouvrages en béton armé ou d'éléments de construction en béton armé carrossables selon l'au moins une des revendications 14 à 15, **caractérisée en ce qu'**un scellement de finition est placé sur la couche de protection de surface.
